# EUROPÄISCHE PATENTSCHRIFT

(11) **EP 1 275 296 B1**
(45) Veröffentlichungstag und Bekanntmachung des Hinweises auf die Patenterteilung: **08.02.2006**
(21) Anmeldenummer: 02014334.3
(22) Anmeldetag: 27.06.2002
(51) Int. Cl.: A01J 25/11

(54) **Verfahren zur Abfüllung und Weiterverarbeitung einer Mischung aus Käsebruch und Molke**
Method for filling and further processing a mixture of curd and whey
Méthode pour remplir et retravailler un mélange de caillé et de petit lait

(30) Priorität: 13.07.2001 DE 10134235
(43) Veröffentlichungstag der Anmeldung: 15.01.2003
(73) Patentinhaber: ALPMA Alpenland Maschinenbau GmbH, 83543 Rott am Inn (DE)
(72) Erfinder: Hain, Gottfried, Dipl.-Ing., 83539 Pfaffing (DE); Dürmeier, Siegfried, Dipl.-Ing., 84556 Kastl (DE); Hubatschek, Josef, 83093 Bad Endorf (DE); Ostermeier, Norbert, 83527 Haag (DE)
(74) Vertreter: Manitz, Finsterwald & Partner GbR

(56) Entgegenhaltungen:
- EP-A- 0 776 603
- DE-C- 972 371
- US-A- 4 019 984
- US-A- 4 237 781
- US-A- 4 509 413

## Beschreibung

Die vorliegende Erfindung betrifft ein Verfahren zur Abfüllung und Weiterverarbeitung einer Mischung aus Käsebruch und Molke gemäß dem Oberbegriff des Anspruchs 1.

Bei der Käseherstellung wird durch die Verarbeitung von Milch unter teilweiser Gerinnung derselben ein Gemisch aus Käsebruch und Molke hergestellt. Diesem Gemisch wird im folgenden je nach der Art des herzustellenden Käses, zum Beispiel Weich- oder Schnittkäse, die Molke wenigstens teilweise entzogen, um die gewünschte Textur des Käses erzielen. Dazu wird in der Regel die Mischung aus einem Vorratsbehälter über eine entsprechende Leitung in eine Käseform eingefüllt. Der Mischung wird sodann die Molke entzogen, wobei zunächst ein Käsebruchkuchen entsteht, der gegebenenfalls in der Käseform gepreßt wird.

Für eine wirtschaftliche Käseherstellung ist es daher notwendig, das Abfüllen und die Verarbeitung der Mischung aus Käsebruch und Molke möglichst schnell und einfach durchzuführen.

In US-A-4,509,413 ist ein Verfahren zum Behandeln von Käsekörnern in einer in einer Ablasswanne befindlichen Käseform beschrieben, bei dem die in einem Käsekessel gebildeten Käsekörner in die siebartige Käseform abgelassen werden, in welcher sich die mit den Körnern mitfolgende Molke abscheidet und in welcher das Pressen der Körner ausgeführt wird. Dabei wird in der Form ein siebartiger Deckelteil verwendet, mit dem die Form für die Dauer des Ablassens der Käsekörner verschlossen wird, sodass der Deckelteil und die Käseform beim Befüllen relativ zueinander ruhen. Die Käsekörner werden in die Form durch eine Öffnung im Deckteil eingelassen, an welche die vom Käsekessel kommende Ablassleitung angeschlossen ist. Der Deckelteil wird nach erfolgtem Ablassen der Käsekörner zum Pressen der Körner benutzt.

In US-A-4,019,984 sind ein Verfahren und eine Vorrichtung zur kontinuierlichen Filtration von Flüssigkeiten, die Mikroorganismen, Makromoleküle und/oder feine Festkörperteilchen als abzutrennende Stoffe enthalten, beschrieben. Die zu filternde Flüssigkeit wird von oben in einen aufrecht stehenden Siebkorb geführt, wo das Filtrat von den auszufilternden Stoffen getrennt wird. Durch eine Pressvorrichtung wird auf die Flüssigkeit Druck ausgeübt, so dass das Filtrat aus dem Siebkorb austritt und die gesamte Oberfläche des gebildeten Filterkuchens immer ungefähr gleichmäßig hoch in dem Siebkorb steht. Die Flüssigkeit in dem Siebkorb wird mit zunehmendem Gegendruck in den Raum unterhalb der Pressvorrichtung in dem Siebkorb gepresst. Wenn der Gegendruck der Flüssigkeit größer als der Druck der Pressvorrichtung auf die Flüssigkeit wird, wird die Pressvorrichtung um einen kleinen Abstand über dem Filterkuchen in dem Siebkorb angehoben. Die Vorrichtung umfasst ein Gehäuse und einen in dem Gehäuse gehaltenen, oben und unten offenen Siebkorb, der auf oder nahe einem Boden des Gehäuses angeordnet ist. Eine in axialer Richtung bewegliche Scheibe ist in dem Siebkorb gehalten und teilt den Siebkorb in eine untere Kammer, die die zu filtrierende Flüssigkeit aufnimmt, und eine obere Kammer, die gegenüber der unteren Kammer abgedichtet ist. Eine Zuleitung ist mit wenigstens einer Öffnung in der Scheibe verbunden, um die Flüssigkeit in die untere Kammer zu führen. Kraft ausübende Einrichtungen wirken auf die Scheibe und bilden zusammen mit der Scheibe eine Pressvorrichtung, die Druck auf die Flüssigkeit in der unteren Kammer des Siebkorbes ausübt.

Es ist Aufgabe der Erfindung, ein Verfahren zur Abfüllung und Weiterverarbeitung einer Mischung aus Käsebruch und Molke einschließlich des Verpressens in einer Käseform bereitzustellen, die einen möglichst einfachen und schnellen Entzug der Molke und ein nachfolgendes Pressen des so entstandenen Käsebruchkuchens erlaubt, wobei gleichzeitig während des Befüllens der Käseform ein Kontakt der eingefüllten Mischung mit Luft zumindest weitgehend vermieden werden soll.

Die Aufgabe wird gelöst durch ein Verfahren mit den Merkmalen nach Anspruch 1.

Bevorzugte Weiterbildungen und Ausführungsformen der Erfindung sind in der Beschreibung, den Zeichnungen und den Ansprüchen beschrieben.

Bei dem erfindungsgemäßen Verfahren zur Abfüllung und Weiterverarbeitung einer Mischung aus Käsebruch und Molke, die in einem Vorratsbehälter enthalten ist, wird zunächst eine Käseform bereitgestellt, die eine umlaufende, wenigstens bereichsweise für Molke durchlässige Seitenwand aufweist. Zum Befüllen wird in dem nächsten Schritt ein Füllende einer mit dem Vorratsbehälter verbundenen Leitung, die durch eine Absperrvorrichtung im Bereich des Füllendes der Leitung verschließbar ist, in die Käseform durch Relativbewegung von Leitung und Käseform eingeführt, wobei das Füllende der Leitung so ausgebildet ist, daß die in die Käseform eingeführte Leitung wenigstens entlang einer umlaufenden Linie einen Abstand von maximal 1,4 mm zur Seitenwand der Käseform aufweist. Hierdurch wird die Käseform im wesentlichen dicht in Bezug auf die Käsebruchteilchen abgeschlossen, von denen höchstens wenige, nur weit unterdurchschnittlich kleine Teilchen durch den engen Spalt aus der Käseform austreten können. Im folgenden Schritt wird ein vorgegebenes Volumen der Mischung durch die Leitung in die Käseform gefüllt. Zum Befüllen wird bei durch die Absperrvorrichtung geschlossener Leitung durch Relativbewegung das Füllende nahe einem Boden der Käseform positioniert, dann die Leitung geöffnet und das Füllende während des Befüllens relativ vom Boden wegbewegt, wobei die Geschwindigkeit der Relativbewegung zwischen dem Füllende und dem Boden der Käseform so gering ist, dass der Raum zwischen den Wänden der Form und dem Füllende der Leitung während des Befüllens immer mit einer Mischung aus Käsebruch und Molke ausgefüllt ist. Hierdurch können beim Befüllen der Käseform die Bildung von Luftblasen und eine die Qualität der Mischung negativ beeinflussende Berührung der Mischung mit Luft vermeiden werden.

Die Leitung wird sodann durch die Absperrvorrichtung im Bereich des Füllendes der Leitung geschlossen. Im nächsten Schritt wird die in der Käseform enthaltene Mischung durch Relativbewegung des Füllendes der Leitung mit Absperrvorrichtung zur Käseform mit Druck beaufschlagt, um Molke durch die wenigstens bereichsweise für Flüssigkeit durchlässige Wand der Käseform zu pressen.
Bei der Käseform kann es sich um eine übliche Käseform mit Mikroperforation handeln.

Das erfindungsgemäße Verfahren zeichnet sich durch seine Einfachheit aus, da außer der Relativbewegung von Käseform und Leitung keine weitere, insbesondere horizontale, Bewegung der Käseform zur Abfüllung der Mischung und zum Pressen des Käsebruchkuchens und insbesondere auch keine separaten Preßwerkzeuge notwendig sind. Hierdurch arbeitet das erfindungsgemäße Verfahren auch besonders schnell. Weiterhin wird durch das Pressen zugleich ein schnelles Entfernen der Molke aus der Käseform und meist die Ausbildung einer glatten Oberfläche des Käsebruchkuchens erreicht, wobei durch Wahl geeigneter Preßparameter eine gewünschte Textur unter Zusamrnenlagerung von Käsebruchteilchen bildbar ist.

Das erfindungsgemäße Verfahren kann vorteilhaft mit einer nachstehend beschriebenen Vorrichtung durchgeführt werden, wobei grundsätzlich jedoch auch andere Vorrichtungen verwendet werden können.

Eine geeignete Vorrichtung zur Abfüllung und Weiterverarbeitung einer Mischung aus Käsebruch und Molke weist zumindest eine Käseform mit einer umlaufenden, wenigstens bereichsweise für Molke durchlässigen Seitenwand, einen Vorratsbehälter für eine Mischung aus Käsebruch und Molke und eine zum Transport der Mischung vom Vorratsbehälter in die Käseform ausgebildete Leitung auf, die ein in die Käseform einführbares Füllende aufweist. Erfindungsgemäß ist die Leitung an ihrem Füllende so ausgebildet, daß sie nach Einführen des Füllendes in die Käseform wenigstens entlang einer umlaufenden Linie einen Abstand von maximal 1,4 mm zur Seitenwand der Käseform aufweist. Grundsätzlich kann sich der Abstand zwischen Preßelement und Seitenwand der Form entlang der um das Preßelement umlaufenden Linie ändern. Die Angabe eines Abstands von maximal 1,4 mm zur Seitenwand, auch als maximaler Abstand bezeichnet, bedeutet daher in dieser Anmeldung, daß der Abstand an jedem Punkt der umlaufenden Linie kleiner als 1,4 mm ist, jedoch die Abstände an verschiedenen Punkte stark differieren können. Beispielsweise kann der Abstand an einem Punkt 1,39 mm und an einem anderen, zum Beispiel gegenüberliegenden, Punkt nur 0,1 mm betragen. Durch diese Ausbildung des Füllendes wird die Käseform im wesentlichen dicht in Bezug auf die Käsebruchteilchen abgeschlossen, von denen höchstens wenige, nur weit unterdurchschnittlich kleine Teilchen durch den engen Spalt aus der Käseform austreten können.

Weiterhin ist im Bereich des Füllendes der Leitung eine Absperrvorrichtung vorgesehen, mittels derer die Leitung, insbesondere zum Füllen der Käseform, wenigstens teilweise zu öffnen und, insbesondere am Ende des Befüllens, vollständig verschließbar ist. Durch diese Absperrvorrichtung kann ein Entlüften der Käseform während des Befüllens oder am Ende des Befüllens vermieden werden.

Schließlich ist eine Einrichtung zur Relativbewegung vorgesehen, um die Relativposition des Füllendes der Leitung zur Käseform zumindest zwischen einer Befüllposition, in der das Füllende der Leitung in die Käseform eingeführt ist, und einer Preßposition zu verändern, wobei durch Bewegung von der beim Befüllen der Käseform zuletzt eingenommenen Befüllposition in die Preßposition bei geschlossener Absperrvorrichtung die in die Käseform eingefüllte Mischung mit Druck beaufschlagt und Molke aus der Mischung durch die wenigstens teilweise flüssigkeitsdurchlässige Wand der Käseform gedrückt wird. Durch die Enge des Spaltes zwischen Leitung und Seitenwand der Käseform wird dabei ein Austreten des Käsebruchs aus der Form im Wesentlichen verhindert.

Hierbei kann die Absperrvorrichtung an der Wand der Leitung gehalten sein, grundsätzlich genügt es jedoch, daß die Absperrvorrichtung zusammen mit der Leitung bewegt wird, so daß die Preßwirkung erzielt wird.

Bei der beschriebenen Vorrichtung dient die Absperrvorrichtung zum einen als Ventil zur Steuerung des Zuflusses der Mischung aus Käsebruch und Molke und zum anderen in geschlossenem Zustand dem Pressen des in der Käseform vorhandenen Käsebruchs. Auch die Leitung wird einerseits als Zuführung für die Mischung und andererseits in Form des Füllendes im Zusammenspiel mit der Absperrvorrichtung als Preßstempel verwendet. Insgesamt ergibt sich so eine sehr einfache Vorrichtung zur Abfüllung und Weiterverarbeitung der Mischung aus Käsebruch und Molke, da der Absperrvorrichtung und der Leitung jeweils eine Doppelfunktion zukommt.

Darüber hinaus kann das Befüllen der Form, der Entzug der Molke und das Pressen des Käsebruchs in nur einer Vorrichtung in einem Arbeitsgang erfolgen, ohne daß die Käseform zwischen verschiedenen Arbeitsstationen, das heißt insbesondere horizontal, bewegt werden müßte. Dies führt weiterhin zu einem besonders geringen Platzbedarf der beschriebenen Vorrichtung. Zudem ist es natürlich auch nicht nötig, separate Preßwerkzeuge vorzusehen, die eigens angesteuert und bewegt werden müssen.

Weiterhin sind die Einrichtung zur Relativbewegung und die Absperrvorrichtung so ausgebildet, daß zum Befüllen bei durch die Absperrvorrichtung abgesperrter Leitung durch Relativbewegung das Füllende nahe einem Boden der Käseform positioniert, dann die Leitung geöffnet und das Füllende während des Befüllens vom Boden wegbewegt wird. Dabei bestimmt sich die Geschwindigkeit der Relativbewegung aus der Zuflußgeschwindigkeit der Mischung durch die Leitung und die Gestalt der Käseform. Die Geschwindigkeit ist so gering, daß der Raum zwischen den Wänden der Form und dem Füllende der Leitung während des Befüllens immer mit einer Mischung aus Käsebruch und Molke ausgefüllt ist. Dieser Aufbau ermöglicht es beim Befüllen bei durch die Absperrvorrichtung geschlossener Leitung durch Relativbewegung das Füllende nahe einem Boden der Käseform zu positionieren, dann die Leitung zu öffnen und das Füllende während des Befüllens relativ vom Boden wegzubewegen. Wie bereits ausgeführt, können dadurch beim Befüllen der Käseform die Bildung von Luftblasen und eine die Qualität der Mischung negativ beeinflussende Berührung der Mischung mit Luft vermieden werden,

Wegen einer guten Durchlässigkeit für Molke, nicht aber Käsebruch liegt der maximale Abstand der in die Käseform eingeführten Leitung zur Seitenwand der Käseform bevorzugt im Bereich zwischen 0,4 und 1,4 mm. Besonders vorteilhaft wird das Preßelement in etwa zentriert in die Käseform eingeführt, so daß ein mittlerer Abstand zur Seitenwand, der durch Mittelung der Abstände entlang der umlaufenden Linie erhalten werden kann, dann zwischen 0,4 und 0,8 mm, besonders bevorzugt bei 0,5 mm, liegt.

Bevorzugt weist die Leitung an ihrem Füllende ein Preßelement auf, das die Öffnung der Leitung an dem Füllende wenigstens teilweise umgibt, und nach Einführen des Füllendes der Leitung in die Käseform wenigstens entlang einer umlaufenden Linie einen Abstand von maximal 1,4 mm zur Seitenwand der Käseform aufweist. Hierdurch ist es auch möglich, bei einem kleinen, für die Abfüllung günstigen Leitungsquerschnitt auch größere Käseformen zu benutzen, womit entsprechend größere Käsebruchkuchen hergestellt werden können. Weiterhin können selbst bei Verwendung üblicher, zylindrischer Leitungsrohre Käseformen zum Beispiel für rechteckige Käsestücke bei der Abfüllung und Weiterverarbeitung der Mischung verwendet werden, indem entsprechend rechteckige Preßelemente zum Einsatz gelangen.
Besonders bevorzugt ist das Preßelement lösbar mit der Leitung verbunden, was zum Beispiel durch entsprechende Flansche mit Schraubverbindungen geschehen kann. Hierdurch ist es möglich, unterschiedliche Käseformen zu verwenden, wobei das Preßelement entsprechend der Form der Käseformen ausgetauscht werden kann. Besonders vorteilhaft ist es dabei, wenn die Verbindung über entsprechende Schnellspanner erfolgt. Bevorzugt kann auch die Käseform lösbar an der Vorrichtung gehalten sein, so daß ein einfacher Austausch, zum Beispiel zur Änderung des Käseformtyps oder zur Entnahme des Käsebruchkuchens nach dem Pressen möglich ist. Hierzu kann zum Beispiel ein entsprechender Träger für die Käseform vorgesehen sein.

Weiterhin ist besonders bevorzugt das Preßelement durch eine Preßplatte mit einer in der Regel mittels der Absperrvorrichtung verschließbaren Öffnung gebildet, wobei die äußere Konturlinie der Preßplatte der Form des herzustellenden Käsestücks entspricht. Zum einen ergibt sich hierdurch eine besonders einfache Konstruktion des Preßelements, zum anderen kann durch die Verwendung einer solchen Preßplatte einfach eine im Wesentlichen glatte Oberfläche des Käsebruchkuchens erzielt werden.

Obwohl die Absperrvorrichtung nicht notwendig an der Leitung gehalten sein muß, sind in einer bevorzugten Weiterbildung wenigstens Teile der Absperrvorrichtung fest mit der Leitung verbunden. Hierdurch kann eine besonders einfache Halterung der Absperrvorrichtung erreicht werden. Darüber hinaus kann diese allein durch Bewegung des Füllendes der Leitung bewegt werden, wodurch keine eigener Antrieb erforderlich ist. Vorteilhaft ist hierzu die Leitung starr ausgebildet, da sie so gleichzeitig als Halter für das Preßelement dient und die Kräfte beim Pressen aufnehmen kann.

In einer besonders einfachen und daher bevorzugten Weiterbildung weist die Absperrvorrichtung mindestens einen in der Leitung oder an deren Füllende bewegbaren Schieber auf. Vorteilhaft kann hierbei der Schieber vollständig aus der Leitung bewegbar sein, so daß die Mischung ungestört in die Käseform fließen kann. Diese einfache und robuste Ausführung der Absperrvorrichtung hat weiterhin den Vorteil, daß beim Schließen der Absperrvorrichtung keine Behinderung durch Käsebruchstücke im Bereich der Absperrvorrichtung auftreten kann, da diese durch den Schieber, insbesondere wenn dieser eine scharfe Kante in Richtung der Schließbewegung aufweist, zerteilt würden.

Vorteilhaft ist weiterhin in dem Fall, daß eine Preßplatte verwendet wird, der Schieber zumindest im wesentlichen in der Ebene der Preßplatte geführt, wodurch zum einen eine besonders gute und stabile Führung des Schiebers erreicht werden kann und zum anderen durch das Pressen keine oder nur sehr kleine Erhebungen in dem Bereich eines mit der Vorrichtung hergestellten späteren Käsebruchkuchens verursacht werden, die sonst im Bereich des Füllendes aufträten.

Die Absperrvorrichtung kann hierbei von Hand oder zum Beispiel über pneumatische oder elektrische Antriebe betätigt werden.

Um sicherzustellen, daß bei jeder Befüllung die Käseform mit etwa der gleichen Menge Käsebruch befüllt und so ein Käsebruchkuchen etwa gleichen Gewichts und gleicher Textur erzielt wird, sollte der Käsebruch in der Mischung möglichst homogen verteilt sein. Hierzu kann bevorzugt in dem Vorratsbehälter eine Mischeinrichtung, zum Beispiel ein Rührer, vorgesehen sein, mit der ein Absetzen des Käsebruchs in der Mischung am Boden des Vorratsbehälters vermieden werden kann.

Weiterhin sollte bevorzugt die Leitung zwischen Vorratsbehälter und Absperrvorrichtung nicht sehr lang sein, damit sich während der Zeitspanne, innerhalb derer die Absperrvorrichtung geschlossen ist, nicht zuviel Käsebruch in der Leitung oberhalb der Absperrvorrichtung absetzen kann. Grundsätzlich kann jedoch in dieser - wenn auch kurzen - Zeit weiterer Käsebruch aus dem Vorratsbehälter in die Leitung absinken und so die Konzentration des Käsebruchs in der Mischung in der Leitung erhöhen, was wiederum beim nächsten Befüllen zu einer zu großen Käsebruchmenge in der Käseform führen könnte.

Besonders bevorzugt ist daher in der Leitung nahe dem Vorratsbehälter eine weitere Absperrvorrichtung vorgesehen, mittels derer der Zufluß von Mischung und insbesondere ein Absinken allein von Käsebruch aus dem Vorratsbehälter in die Leitung vermieden werden kann.

Hierzu wird in einer bevorzugten Weiterbildung des erfindungsgemäßen Verfahrens die weitere Absperrvorrichtung synchron mit der Absperrvorrichtung geschlossen, so daß in dem Leitungsabschnitt zwischen den Absperrvorrichtungen auch bei geschlossener Absperrvorrichtung am Füllende eine Mischung mit der gewünschten Konzentration von Käsebruch vorliegt. Die Vorrichtung weist hierzu besonders bevorzugt eine Einrichtung zum synchronen Schließen der Absperrvorrichtung und der weiteren Absperrvorrichtung auf. Hierbei kann es sich um ein Getriebe handeln, mittels dessen beide Absperrvorrichtung gemeinsam betätigt werden, oder eine Steuereinrichtung, die die Stellorgane der Absperrvorrichtungen synchron ansteuert.

Bevorzugt kann auch die weitere Absperrvorrichtung mindestens einen in der Leitung oder an deren Füllende bewegbaren Schieber aufweisen, wobei bei entsprechender Ausbildung die gleichen Vorteile erzielt werden wie bei der ersten Absperrvorrichtung.

Bevorzugt wird bei der Relativbewegung zwischen Füllende und Käseform die Käseform bewegt, wobei besonders bevorzugt dabei das Füllende der Leitung stationär ist. Hierdurch wird eine Bewegung des Füllendes vermieden, die zum einen eine flexible Leitung erforderte, die durch fortlaufend gleiche Bewegung beim Befüllen und Pressen einer gewissen Ermüdung unterläge. Zum anderen wäre bei einer starren Leitung eine Bewegung der Leitung mit dem Vorratsbehälter notwendig, die aufgrund des im Vergleich zu der Käseform schweren und sperrigen Vorratsbehälters Antriebseinrichtungen mit größerer Leistung und aufwendigerer Lagerung erforderte.

Es können jedoch bei einer nachteiligen Ausführungsform auch die Käseform stationär angeordnet und die Einrichtung zur Relativbewegung so ausgebildet sein, daß das Füllende der Leitung bewegbar ist. Damit würde während der Relativbewegung bei stationärer Käseform das Füllende der Leitung bewegt.

Die Einrichtung zur Relativbewegung kann elektrisch oder pneumatisch angetrieben sein.

Bevorzugt ist die Geschwindigkeit der Relativbewegung so bemessen, daß der Preßdruck in der Käseform zwischen etwa 20 g/cm² und 300 g/cm² liegt.

Bevorzugt kann die Geschwindigkeit der Relativbewegung beim Pressen zwischen etwa 13 mm/s und etwa 25mm/s betragen, wodurch eine gleichmäßige, aber schnelle Entfernung der Molke erreicht wird.

Der Preßweg kann bevorzugt etwa 10% bis 40% der Füllhöhe in der Käseform betragen.

Weiterhin wird bevorzugt die Mischung unter Überdruck in die Käseform eingefüllt, wodurch zum einen ein schnelleres Befüllen ermöglicht wird und zum anderen die Molke schon während des Befüllens schneller und gleichmäßiger aus der Mischung von Käsebruch und Molke durch eine bereichsweise für Molke durchlässige Wand der Käseform gepreßt wird. Das schnellere Befüllen wird durch die erfindungsgemäße Ausbildung des Füllendes der Leitung ermöglicht, das einen Abstand von maximal 1,4 mm von der Seitenwand der Käseform aufweist, wodurch zwar die Molke, nicht aber der Käsebruch, gegebenenfalls bis auf höchstens sehr wenige, nur sehr kleine Käsebruchteilchen, aus der Käseform herausgedrückt werden kann.

Besonders bevorzugt kann hierzu der Vorratsbehälter für die Mischung oberhalb der Käseform angeordnet sein, so daß der Überdruck durch den hydrostatischen Druck der Mischung in dem Vorratsbehälter bereitgestellt wird. Dabei kann vorzugsweise die Leitung im Wesentlichen senkrecht und in im wesentlichen gerader Linie nach unten verlaufen, wodurch zusätzlich ein Absetzen von Käsebruch in Biegungen der Leitungen vermieden wird. Die Größe des Überdrucks hängt dabei wesentlich von der Höhe des Rohres bzw. dem Abstand in vertikaler Richtung zwischen Füllende und Vorratsbehälter ab. Ein gewünschter Überdruck kann daher durch eine entsprechende Wahl der Rohrlänge und des Abstands zwischen Vorratsbehälter und Füllende erhalten werden.

Die Strömungsgeschwindigkeit beim Befüllen kann bevorzugt etwa 1m/s betragen.

In einer bevorzugten Ausführungsform kann eine Vorrichtung zur Durchführung des erfindungsgemäßen Verfahrens auch mehrere Leitungen mit Füllende und mehrere Käseformen aufweisen, wobei eine Anzahl von 2 bis 60 besonders bevorzugt ist. Die Leitungen können dabei zeilen- oder matrixförmig angeordnet sein. Wegen des geringeren konstruktiven Aufwands können vorzugsweise mehrere Leitungen an einen Vorratsbehälter angeschlossen sein, wobei einige Leitungs-/Käseform-Abschnitte asynchron, im Gleichtakt oder besonders bevorzugt zeitlich gegeneinander versetzt arbeiten können, so daß Käsebruchkuchen in gleichmäßiger zeitlicher Folge hergestellt werden. Die Vorrichtung kann hierzu eine entsprechende Steuereinrichtung zur Steuerung der Einrichtung zur Relativbewegung und der Absperreinrichtungen aufweisen.

Eine bevorzugte Ausführungsform einer Vorrichtung zur Durchführung des erfindungsgemäßen Verfahrens und deren Betriebsweise werden nun beispielhaft anhand der Zeichnungen beschrieben. Es zeigen:
- Fig. 1: eine schematische Schnittansicht einer Vorrichtung zu Beginn des Befüllens und
- Fig. 2: eine schematische Schnittansicht der Vorrichtung in Fig. 2 zu Beginn des Pressens.

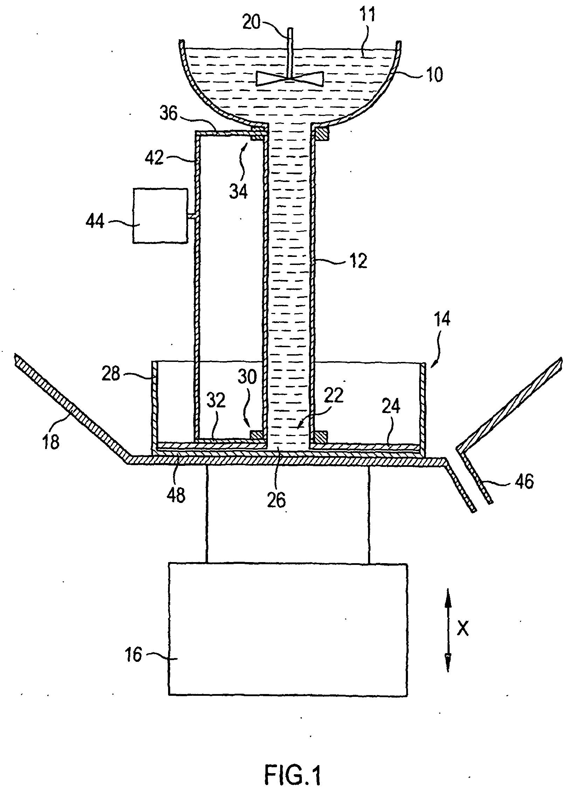

Fig. 1 zeigt eine Vorrichtung zum Abfüllen und zur Weiterverarbeitung einer Mischung 11 aus Käsebruch und Molke mit einem Vorratsbehälter 10, einer damit verbundenen und darunter angeordneten Leitung 12 zum Transport der Mischung 11, einer Käseform 14 und einer Einrichtung 16 zur Relativbewegung mit einem Träger 18 für die Käseform 14.

In dem Vorratsbehälter, der aus Edelstahl gefertigt ist, befindet sich ein Rührer 20, mit dem die Mischung 11 aus Käsebruch und Molke dauernd durchmischt wird, so daß sich kein Käsebruch am Boden des Vorratsbehälters 10 absetzen kann. Das Volumen des Vorratsbehälters kann zwischen 10 und 40 l variieren.

Die Leitung 12 ist aus einem Edelstahlrohr von im Beispiel etwa 5 cm Innendurchmesser und einem Volumen von ca. 2 1 gebildet, an das an seinem in die Käseform einführbaren Füllende 22 eine Preßplatte 24 mit in den Figuren nicht gezeigten Schnellverschlüssen angeflanscht ist. Die Preßplatte 24 weist eine zentrale Öffnung 26 auf, in die das Edelstahlrohr mündet. Die äußere Kontur der Preßplatte 24 ist derart geformt, daß sie wenigstens entlang einer umlaufenden Linie einen mittleren Abstand von ca. 0,5 mm zu der Seitenwand 28 der Käseform 14 hat, wenn die Preßplatte 24 zentriert in die Käseform eingeführt wird. Im Beispiel ist die Käseform 14 zylindrisch ausgebildet, so daß die Preßplatte kreisrund ist. Der Durchmesser der Käseform beträgt etwa 25 cm, der Durchmesser der Preßplatte ist entsprechend kleiner.

In der Leitung 12 sind am Füllende 22 eine Absperrvorrichtung 30 mit einem Schieber 32 und an der Verbindung von Leitung 12 und Vorratsbehälter 10 eine weitere Absperrvorrichtung 34 mit einem weiteren Schieber 36 angeordnet. Diese weitere Absperrvorrichtung 34 ist jedoch optional und kann in einer anderen Ausführungsform fehlen. Die Schieber sind in entsprechend dichten Führungen 38a und 38b bzw. 40a und 40b an der Leitung gehalten. Der Schieber 32 ist dabei, in den Figuren nur schematisch gezeigt, auf der Preßplatte 24 geführt, wodurch er große Kräfte aufnehmen kann.

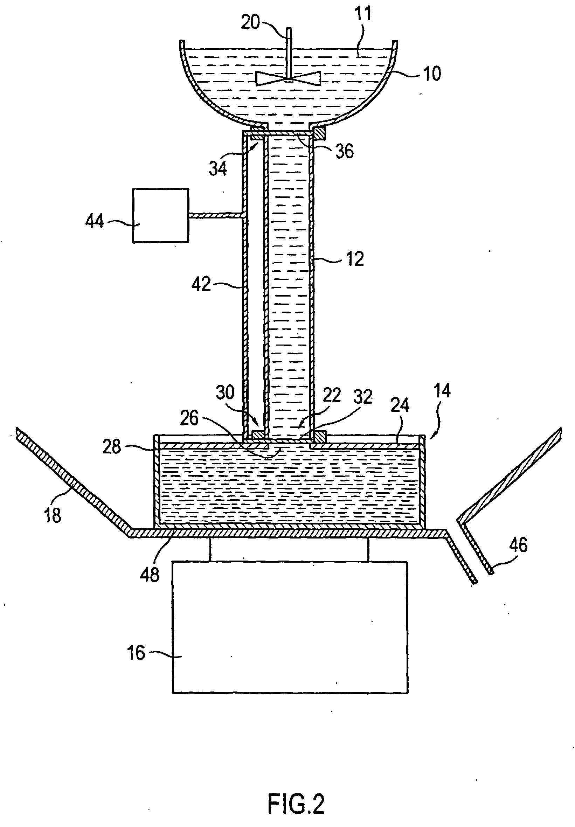

Die Schieber 32 und 36 sind über ein Gestänge 42 mit einer Betätigungsvorrichtung 44 synchron so verschiebbar, daß die Leitung 12, wie in Fig. 1, ganz geöffnet, oder, wie in Fig. 2 gezeigt, ganz geschlossen werden kann.

Die Käseform weist entlang ihrer umlaufenden Seitenwand 28 eine in den Figuren nicht gezeigte übliche Mikroperforation auf, durch die zwar Molke, nicht aber Käsebruch austreten kann.

Während der Vorratsbehälter 10 mit Rührer 20 und die Leitung 12 mit den Absperrvorrichtungen 30 und 34 sowie die Betätigungsvorrichtung 44 mit Gestänge 42 stationär gehalten sind, ist die Käseform 14 auf dem Träger 18 durch die Einrichtung zur Relativbewegung 16 in der mit X bezeichneten Richtung auf und ab bewegbar.

Der Träger 18 ist wannenförmig ausgebildet, so daß in ihm aus der Käseform austretende Molke auffangbar ist, und weist einen in den Figuren nur schematisch gezeigten Abflußstutzen 46 auf, durch den aufgefangene Molke abfließen kann.

Im folgenden wird ein Verfahren zum Abfüllen und zur Weiterverarbeitung einer Mischung aus Käsebruch und Molke nach einer bevorzugten Ausführungsform der Erfindung beschrieben, bei dem die oben beschriebene Vorrichtung verwendet wird.

Nach Bereitstellen der Käseform 14 auf dem Träger 18 wird dieser mit der Käseform mittels der Einrichtung 16 zur Relativbewegung so weit angehoben, daß die Preßplatte 24 nahe dem Boden 48 der Käseform 14 angeordnet ist (vgl. Fig. 1). Anders als in Fig. 1 gezeigt sind hierbei die Absperrvorrichtungen 30 und 34 geschlossen, das heißt, die Schieber 32 und 36 sind in die Leitung 12 eingefahren und verschließen diese. Dabei ist der Abschnitt der Leitung 12 zwischen den Absperrvorrichtungen 30 und 34 mit der Mischung 11 aus Käsebruch und Molke gefüllt.

Im folgenden Schritt werden, wie in Fig. 1 gezeigt, die Absperrvorrichtungen durch Bewegung der Schieber geöffnet, so daß Mischung 11 aus Käsebruch und Molke in die Käseform fließen kann. Dabei wird der Träger 18 mit der Käseform 14 mittels der Einrichtung 16 zur Relativbewegung mit einer solchen Geschwindigkeit abgesenkt, daß der Raum zwischen Preßplatte und Käseform immer vollständig mit einer Mischung 11 aus Käsebruch und Molke gefüllt ist. Im Beispiel beträgt die Strömungsgeschwindigkeit in der Leitung 12 etwa 1 m/s. Die Einrichtung zur Relativbewegung 16 und die Absperrvorrichtung 30 sind so ausgebildet, daß diese Schritte koordiniert ausgeführt werden.

Durch den hydrostatischen Druck der Mischung 11 in dem Vorratsbehälter 10 herrscht in der Käseform ein Überdruck, der bereits in diesem Verfahrensstadium Molke aus der mikroperforierten Seitenwand 28 der Käseform 14 preßt.

Nach Erreichen des vorgegeben Volumens an abzufüllender Mischung werden die Absperrvorrichtungen 30 und 34 durch Bewegung der Schieber 32 bzw. 34 mittels der Betätigungsvorrichtung 44 über das Gestänge 42 synchron geschlossen. Hierdurch wird zum einen das Befüllen der Käseform 14 beendet und zum anderen in dem Abschnitt der Leitung 12 zwischen den Absperrvorrichtungen 30 und 34 die Mischung mit der gleichen Konzentration an Käsebruch wie in dem Vorratsbehälter 10 eingeschlossen, so daß bei dem Öffnen der Absperrvorrichtungen 30 und 34 beim nächsten Verfahrenszyklus zu Anfang sogleich Mischung mit der vorgegebenen Konzentration an Käsebruch und Molke in die Käseform 14 einfüllbar ist.

Aus dieser in Fig.2 gezeigten Position wird nun bei geschlossenen Absperrvorrichtungen 30 und 34 die Käseform 14 durch Anheben des Trägers 18 mit der Einrichtung 16 zur Relativbewegung angehoben, wodurch durch die Käseform 14 ihren Inhalt gegen die Preßplatte 24 und den Schieber 32 als Widerlager preßt. Hierdurch wird zum einen weitere Molke aus der in der Käseform 14 enthaltenen Mischung gepreßt. Zum anderen werden die Käsebruchteilchen zusammengedrückt, so daß sie sich unter Ausbildung eines Käsebruchkuchens gewünschter Textur zusammenlagern. Gleichzeit erhält der Käsebruchkuchen eine im wesentlichen glatte Oberfläche. Der Preßdruck beim Pressen liegt im Beispiel bei etwa 150 g/cm².

Die Aufwärtsbewegung der Käseform 14 wird beendet, wenn die Käseform 14 den vorgegebenen Preßweg zurückgelegt hat, der im Beispiel etwa 25% der Füllhöhe der Käseform 14 beträgt.

Zur Entnahme des Käsebruchkuchens wird dann die Käseform 14 mittels der Einrichtung 16 zur Relativbewegung von dem Füllende 22weg nach unten bewegt, so daß der Käsebruchkuchen entnommen werden kann.

### Bezugszeichenliste

- 10: Vorratsbehälter
- 11: Mischung aus Käsebruch und Molke
- 12: Leitung
- 14: Käseform
- 16: Einrichtung zur Relativbewegung
- 18: Träger
- 20: Rührer
- 22: Füllende
- 24: Preßplatte
- 26: Zentrale Öffnung
- 28: Seitenwand
- 30: Absperrvorrichtung
- 32: Schieber
- 34: weitere Absperrvorrichtung
- 36: weiterer Schieber
- 38a, 38b: Führungen
- 40a, 40b: Führungen
- 42: Gestänge
- 44: Betätigungsvorrichtung
- 46: Abflußstutzen
- 48: Boden

- X: Bewegungsrichtungen des Trägers

## Patentansprüche

1. Verfahren zur Abfüllung und Weiterverarbeitung einer Mischung (11) aus Käsebruch und Molke, die in einem Vorratsbehälter (10) enthalten ist, mit den Schritten:
Bereitstellen einer Käseform (14), die eine umlaufende, wenigstens bereichsweise für Molke durchlässige Seitenwand (28) aufweist,
Einführen eines Füllendes (22) einer mit dem Vorratsbehälter (10) verbundenen Leitung (12), die durch eine Absperrvorrichtung (30) im Bereich des Füllendes (22) der Leitung (12) verschließbar ist, in die Käseform (14) durch Relativbewegung von Leitung (12) und Käseform (14), wobei das Füllende (22) der Leitung (12) so ausgebildet ist, dass die in die Käseform (14) eingeführte Leitung (12) wenigstens entlang einer umlaufenden Linie einen Abstand von maximal 1,4 mm zur Seitenwand (28) der Käseform (14) aufweist,
Einfüllen eines vorgegebenen Volumens der Mischung (11) in die Käseform (14) durch die Leitung (12), wozu bei durch die Absperrvorrichtung (30) geschlossener Leitung (12) durch Relativbewegung das Füllende (22) nahe einem Boden (48) der Käseform (14) positioniert, dann die Absperrvorrichtung (30) geöffnet und das Füllende (22) während des Befüllens relativ vom Boden (48) wegbewegt wird, wobei die Geschwindigkeit der Relativbewegung zwischen dem Füllende (22) und dem Boden (48) der Käseform (14) so gering ist, dass der Raum zwischen den Wänden der Form (14) und dem Füllende (22) der Leitung (12) während des Befüllens immer mit einer Mischung aus Käsebruch und Molke ausgefüllt ist,
Verschließen der Leitung (12) durch die Absperrvorrichtung (30), Beaufschlagung der in der Käseform (14) enthaltenen Mischung (11) mit Druck durch Relativbewegung des Füllendes (22) der Leitung (12) mit Absperrvorrichtung (30) zur Käseform (14), um Molke durch die wenigstens bereichsweise für Flüssigkeit durchlässige Wand (28) der Käseform (14) zu pressen.

2. Verfahren nach Anspruch 1,
**dadurch gekennzeichnet,**
**dass** eine weitere, nahe dem Vorratsbehälter (10) in der Leitung (12) angeordnete Absperreinrichtung (34) synchron mit der Absperrvorrichtung (30) geschlossen wird.

3. Verfahren nach einem der vorhergehenden Ansprüche,
**dadurch gekennzeichnet,**
**dass** während der Relativbewegung die Käseform (14) bewegt wird.

4. Verfahren nach Anspruch 3,
**dadurch gekennzeichnet,**
**dass** während der Relativbewegung das Füllende (22) der Leitung (12) stationär ist.

5. Verfahren nach einem der Ansprüche 1 bis 2,
**dadurch gekennzeichnet,**
**dass** während der Relativbewegung bei stationärer Käseform (14) das Füllende (22) der Leitung (12) bewegt wird.

6. Verfahren nach einem der einem der vorhergehenden Ansprüche,
**dadurch gekennzeichnet,**
**dass** die Mischung (11) unter Überdruck in die Käseform (12) eingefüllt wird.

## Revendications

1. Procédé pour le remplissage et pour la poursuite du traitement d'un mélange (11) de caillé et de petit lait contenu dans un réservoir (10), comprenant les étapes suivantes :
- on prépare un moule à fromage (14) qui comprend une paroi latérale (28) périphérique, au moins localement perméable au petit lait,
- on introduit dans le moule à fromage (14) une extrémité de remplissage (22) d'une conduite (12), reliée au réservoir (10) et susceptible d'être refermée par un dispositif d'obturation (30) dans la zone de l'extrémité de remplissage (22) de la conduite (12), par un mouvement relatif de la conduite (12) et du moule à fromage (14), l'extrémité de remplissage (22) de la conduite (12) étant réalisée de telle sorte que la conduite (12) introduite dans le moule à fromage (14) présente une distance de 1,4 mm au maximum à la paroi latérale (28) du moule à fromage (14), au moins le long d'une ligne périphérique,
- on remplit un volume prédéterminé du mélange (11) dans le moule à fromage (14) à travers la conduite (12), ce pour quoi on positionne l'extrémité de remplissage (22) à proximité d'un fond (48) du moule à fromage (14) par un mouvement relatif, la conduite (12) étant fermée par le dispositif d'obturation (30), ensuite on ouvre le dispositif d'obturation (30) et on déplace l'extrémité de remplissage (22) en éloignement du fond (48) pendant le remplissage, la vitesse du mouvement relatif entre l'extrémité de remplissage (22) et le fond (48) du moule à fromage (14) étant aussi faible que l'espace entre les parois du moule (14) et l'extrémité de remplissage (22) de la conduite (12) est en permanence rempli d'un mélange de caillé et de petit lait pendant le remplissage,
- on referme la conduite (12) par le dispositif d'obturation (30),
- on sollicite en pression le mélange (11) contenu dans le moule à fromage (14) par un mouvement relatif de l'extrémité de remplissage (22) de la conduite (12), pourvue du dispositif d'obturation (30), par rapport au moule à fromage (14), afin de presser le petit lait à travers la paroi (28) du moule à fromage (14) au moins partiellement perméable aux liquides.

2. Procédé selon la revendication 1,
**caractérisé en ce que**
un autre dispositif d'obturation (34) agencé dans la conduite (12) à proximité du réservoir (10) est fermé de façon synchrone avec le dispositif d'obturation (30).

3. Procédé selon l'une des revendications précédentes,
**caractérisé en ce que**
pendant le mouvement relatif, on déplace le moule à fromage (14).

4. Procédé selon la revendication 3,
**caractérisé en ce que**
pendant le mouvement relatif, l'extrémité de remplissage (22) de la conduite (12) est stationnaire.

5. Procédé selon l'une des revendications 1 et 2,
**caractérisé en ce que**
pendant le mouvement relatif, le moule à fromage (14) étant stationnaire, on déplace l'extrémité de remplissage (22) de la conduite (12).

6. Procédé selon l'une des revendications précédentes,
**caractérisé en ce que**
l'on remplit dans le moule à fromage (12) le mélange (11) sous une surpression.

## Claims

1. A method of filling and further processing a mixture (11) of curds and whey which is contained in a storage container (10) comprising the steps of:
making available a cheese mould (14) which has a peripheral side wall (28) permeable to whey at least regionally;
introduction of a filling end (22) of a line (12) connected to the storage container (10) and closable by a cut-off device (30) in the region of the filling end (22) of the line (12) into the cheese mould (14) by a relative movement of the line (12) and the cheese mould (14), wherein the filling end (22) of the line (12) is made such that the line (12) introduced into the cheese mould (14) has a spacing of a maximum of 1.4 mm from the side wall (28) of the cheese mould (14) at least along a peripheral line;
filling of a pre-determined volume of the mixture (11) into the cheese mould (14) through the line (12), for which purpose, when the line (12) is closed by the cut-off device (30), the filling end (22) is positioned close to a base (48) of the cheese mould (14) by a relatve movement, then the cut-off device (30) is opened and the filling end (22) is relatively moved away from the base (48) during the filling, with the speed of the relative movement between the filling end (22) and the base (48) of the cheese mould (14) being so small that the space between the walls of the mould (14) and the filling end (22) of the line (12) is always filled with a mixture of curds and whey during filling;
closing of the line (12) by the cut-off device (30);
applying of pressure to the mixture (11) contained in the cheese mould (14) by a movement of the filling end (22) of the line (12) with the cut-off device (30) relative to the cheese mould (14) to press whey through the wall (28) of the cheese mould (14) at least regionally permeable for liquid.

2. A method in accordance with claim 1, **characterised in that** a further cut-off device (34) arranged close to the storage container (10) in the line (12) is closed synchronously with the cut-off device (30).

3. A method in accordance with any one of the preceding claims, **characterised in that** the cheese mould (14) is moved during the relative movement.

4. A method in accordance with any one of the preceding claims, **characterised in that** the filling end (22) of the line (12) is stationary during the relative movement.

5. A method in accordance with any one of the claims 1 to 2, **characterised in that** the filling end (22) of the line (12) is moved with a stationary cheese mould (14) during the relative movement.

6. A method in accordance with any one of the preceding claims, **characterised in that** the mixture (11) is filled into the cheese mould (12) under overpressure.
